(19) Europäisches Patentamt
European Patent Office
Office européen des brevets

(11) **EP 3 270 329 A1**

(12) **EUROPEAN PATENT APPLICATION**
published in accordance with Art. 153(4) EPC

(43) Date of publication:
**17.01.2018 Bulletin 2018/03**

(51) Int Cl.:
**G06N 3/02** [(2006.01)]

(21) Application number: **15885058.6**

(86) International application number:
**PCT/CN2015/075472**

(22) Date of filing: **31.03.2015**

(87) International publication number:
**WO 2016/145675 (22.09.2016 Gazette 2016/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **13.03.2015 CN 201510111904**

(71) Applicants:
• **Institute of Acoustics, Chinese Academy of Sciences**
  **Haidian District**
  **Beijing 100190 (CN)**
• **Shanghai 3NTV Network Technology Co. Ltd.**
  **Shanghai 200072 (CN)**

(72) Inventors:
• **WANG, Jinlin**
  **Beijing 100190 (CN)**
• **YOU, Jiali**
  **Beijing 100190 (CN)**
• **SHENG, Yiqiang**
  **Beijing 100190 (CN)**
• **LI, Chaopeng**
  **Beijing 100190 (CN)**

(74) Representative: **Hanna Moore + Curley**
  **Garryard House**
  **25/26 Earlsfort Terrace**
  **Dublin 2, D02 PX51 (IE)**

(54) **BIG DATA PROCESSING METHOD FOR SEGMENT-BASED TWO-GRADE DEEP LEARNING MODEL**

(57) Provided is a big data processing method for a segment-based two-grade deep learning model. The method comprises: step 1), constructing and training a segment-based two-grade deep learning model, wherein the model is divided into two grades in a longitudinal level: a first grade and a second grade, each layer of the first grade is divided into M segments in a horizontal direction, and the weight between neuron nodes of adjacent layers in different segments of the first grade is zero; step 2), dividing big data to be processed into M sub-sets according to the type of the data and respectively inputting same into M segments of a first layer of the segment-based two-grade deep learning model for processing; and step 3), outputting a big data processing result. The segment-based two-grade deep learning model provided in the present invention can effectively reduce the scale of a model and shortens a training time of the model. The method of the present invention can increase the big data processing speed and shorten the processing time.

Constructing and training a segment-based two-grade deep learning model

↓

Dividing big data to be processed into M sub-sets according to the type of the data, and respectively inputting same into M segments of a first layer of the segment-based two-grade deep learning model for processing

↓

Outputting a big data processing result

FIG. 1

## Description

### TECHNICAL FIELD

The present invention relates to the field of artificial intelligence and big data, and in particular, to a big data processing method for a segment-based two-grade deep learning model.

### BACKGROUND OF THE INVENTION

With the rapid development of network technologies, data volume and data diversity increase rapidly, but it is difficult to improve the complexity of the algorithms for data processing, thus how to effectively processing big data has become an urgent problem. The existing methods for data description, data labelling, feature selection, feature extraction and data processing depending on personal experiences and manual operation can hardly meet the requirements of the fast growth of big data. The rapid development of artificial intelligence technologies, especially the breakthrough of the investigation on deep learning algorithms, indicates a direction worth exploring of solving the problem of big data processing.

Hinton, et al, proposed a layer-by-layer initialization training method for a deep belief network in 2006. This is a starting point of the investigation on deep learning methods, which breaks the situation of difficult and inefficient deep neural network training that lasts decades of years. Thereafter, deep learning algorithms are widely used in the fields of image recognition, speech recognition and natural language understanding, etc. By simulating the hierarchical abstraction of human brains, deep learning can obtain a more abstract feature via mapping bottom data layer by layer. Because it can automatically abstract a feature from big data and obtain a good processing effect via massive sample training, deep learning gets wide attention. In fact, the rapid growth of big data and the breakthrough of investigation on deep learning supplement and promote each other. On one hand, the rapid growth of big data requires a method for effectively processing massive data; on the other hand, the training of a deep learning model needs massive sample data. In short, by big data, the performance of deep learning can reach perfection.

However, the existing deep learning model has many serious problems, for example, difficult model extension, difficult parameter optimization, too long training time and low reasoning efficiency, etc. A review paper of Bengio, 2013 summarizes the challenges and difficulties faced by the current deep learning, which includes: how to expand the scale of an existing deep learning model and apply the existing deep learning model to a larger data set; how to reduce the difficulties in parameter optimization; how to avoid costly reasoning and sampling; and how to resolve variation factors, etc.

### SUMMARY OF THE INVENTION

It is an object of the present invention to overcome the above problems of an existing neural network deep learning model in the application of big data and propose a segment-based two-grade deep learning model. The expansion capability of the model can be improved by grading and segmenting the deep learning model and restricting the weight of segments. Based on the model, the present invention proposes a big data processing method for a segment-based two-grade deep learning model, which can increase the big data processing speed and shorten the processing time.

In order to attain the above object, the present invention provides a big data processing method for a segment-based two-grade deep learning model, said method comprises:

step 1) constructing and training a segment-based two-grade deep learning model, wherein the model is divided into two grades in a longitudinal level: a first grade and a second grade; each layer of the first grade is divided into M segments in a horizontal direction; wherein, M is a modality number of a multimodality input, and a weight between neuron nodes of adjacent layers in different segments of the first grade is 0;

step 2) dividing big data to be processed into M subsets according to a type of the data, and respectively inputting same into M segments of a first layer of the segment-based two-grade deep learning model for processing; and

step 3) outputting a big data processing result.

In the above technical solution, the step 1) further comprises:

step 101) dividing a deep learning model with a depth of L layers into two grades in a longitudinal level, i.e., a first grade and a second grade:

wherein, an input layer is a first layer, an output layer is an $L^{th}$ layer, and an $(L^*)^{th}$ layer is a division layer, $2 \leq L^* \leq L - 1$, then all the layers from the first layer to the $(L^*)^{th}$ layer are referred to as the first grade, and all the layers from an $(L^*+1)^{th}$ layer to the $L^{th}$ layer are referred to as the second grade;

step 102): dividing neuron nodes on each layer of the first grade into M segments in a horizontal direction:

it is set that an input width of the L-layer neural network is N, that is, each layer has N neuron nodes, the neuron nodes of the first grade are divided into M segments, and a width of each

segment is $D_m$, $1 \leq m \leq M$ and $\sum_{m=1}^{M} D_m = N$,

and in a same segment, widths of any two layers are the same;

step 103) dividing training samples into M sub-sets, and respectively inputting same into the M segments of the first layer of the deep learning model;

step 104) respectively training the sub-models of the M segments of the first grade:

the weight between neuron nodes of adjacent layers in different segments of the first grade is 0, that is, a set of all the nodes of the $m^{th}$ segment is $S_m$, any node of the ($l$-1)$^{th}$ layer is $s_{i(m),l-1} \in S_m$, wherein $2 \leq l \leq L^*$, while any node of the $l^{th}$ layer of the o$^{th}$ segment is $s_{j(o),l} \in S_o$ and $m \neq o$, then a weight between node $s_{i(m),l-1}$ and node $s_{j(o),l}$ is 0, i.e., $w_{i(m),j(o),l} = 0$; under the above constraint conditions, the sub-models of the M segments of the first grade are respectively trained via a deep neural network learning algorithm;

step 105): training each layer of the second grade; and

step 106): globally fine-tuning a network parameter of each layer via the deep neural network learning algorithm, till the network parameter of each layer reaches an optimal value.

In the above technical solutions, a value of L* is taken by determining an optimal value in a value interval of L* via a cross validation method.

The present invention has the following advantages:

1) the segment-based two-grade deep learning model proposed by the present invention effectively reduces the scale of a model, and shortens the training time of the model;
2) the big data processing method proposed by the present invention supports parallel input of multisource heterogeneous or multimodality big data, increases the big data processing speed, and shortens the processing time.

**BRIEF DESCRIPTION OF THE DRAWINGS**

FIG. 1 is a flowchart of a big data processing method for a segment-based two-grade deep learning model of the present invention; and
FIG. 2 is a schematic diagram of a segment-based two-grade deep learning model.

**DETAILED DESCRIPTION OF THE INVENTION**

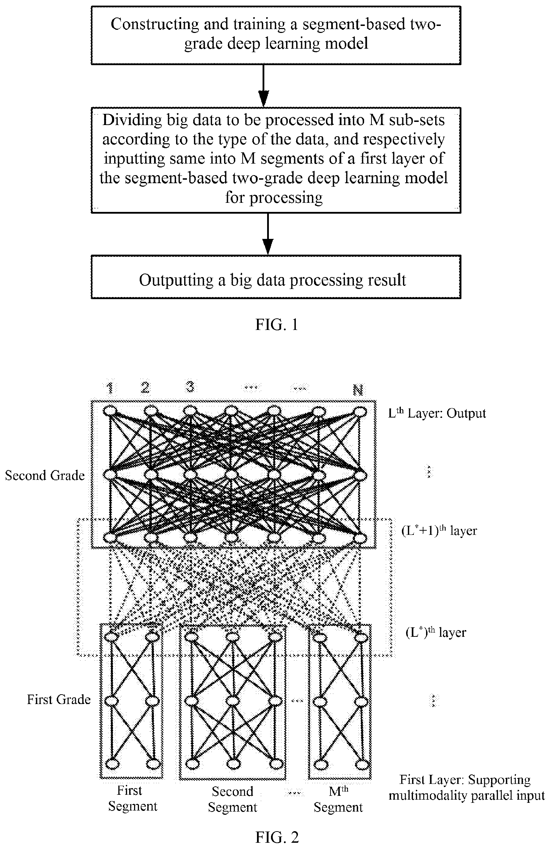

Further detailed description on the method of the present invention will be given below in conjunction with the drawings.
As shown in FIG. 1, a big data processing method for a segment-based two-grade deep learning model comprises:

step 1) constructing and training a segment-based two-grade deep learning model, which comprises:

step 101) dividing a deep learning model with a depth of L layers into two grades in a longitudinal direction, i.e., a first grade and a second grade:

wherein, an input layer is a first layer, an output layer is an L$^{th}$ layer, and an (L$^*$)$^{th}$ layer is a division layer, wherein $2 \leq L^* \leq L$-1, then all the layers from the first layer to the (L$^*$)$^{th}$ layer are referred to as the first grade, and all the layers from an (L*+1)$^{th}$ layer to the L$^{th}$ layer are referred to as the second grade; and
a value of L* is taken by determining an optimal value in a value taking interval of L* via a cross validation method;

step 102) dividing neuron nodes on each layer of the first grade into M segments in a horizontal direction; wherein, M is a modality number of a multimodality input;
as shown in FIG. 2, it can be set that an input width of the L-layer neural network is N, that is, each layer has N neuron nodes, the neuron nodes of the first grade are divided into M segments, and a width of each segment is $D_m$,

$1 \leq m \leq M$ and $\sum_{m=1}^{M} D_m = N$, and in a same segment, widths of any two layers are the same;
step 103) dividing training samples into M sub-sets, and respectively inputting same into the M segments of the first layer of the deep learning model;
step 104) respectively training sub-models of the M segments of the first grade;
the weight between neuron nodes of adjacent layers in different segments of the first grade is 0, that is, a set of all the nodes of the m$^{th}$ segment is $S_m$, any node of the ($l$-1)$^{th}$ layer is $s_{i(m),l-1} \in S_m$, wherein $2 \leq l \leq L^*$, while any node of the $l^{th}$ layer of the o$^{th}$ segment is $s_{j(o),l} \in S_o$ and $s_{i(m),l-1} \in S_m$, wherein $2 \leq l \leq L^*$, while any node of the $l^{th}$ layer of the o$^{th}$ segment is $s_{j(o),l} \in S_o$ and $m \neq o$, then a weight between node $s_{i(m),l-1}$ and node $s_{j(o),l}$ is 0, i.e., $w_{i(m),j}^{(o)}{}_{,l} = 0$;
under the above constraint conditions, the sub-models of the M segments of the first grade are respectively trained via a deep neural network learning algorithm;

step 105) training each layer of the second grade; and

step 106) globally fine-tuning a network parameter of each layer via the deep neural network learning algorithm, till the network parameter of each layer reaches an optimal value;

wherein, the deep neural network learning algorithm is a BP algorithm;

step 2) dividing big data to be processed into M sub-sets according to a type of the data, and respectively inputting same into M segments of the first layer of the segment-based two-grade deep learning model for processing; and

step 3) outputting a big data processing result.

Finally, it should be noted that the above embodiments are merely used to illustrate, rather than limit, the technical solutions of the present invention. Although the present invention has been illustrated in detail referring to the embodiments, it should be understood by one of ordinary skills in the art that the technical solutions of the present invention can be modified or equally substituted without departing from the spirit and scope of the technical solutions of the present invention. Therefore, all the modifications and equivalent substitution should fall into the scope of the claims of the present invention.

## Claims

1. A big data processing method for a segment-based two-grade deep learning model, said method comprises:

    step 1) constructing and training a segment-based two-grade deep learning model, wherein the model is divided into two grades in a longitudinal level: a first grade and a second grade; each layer of the first grade is divided into M segments in a horizontal direction; wherein, M is a modality number of a multimodality input, and a weight between neuron nodes of adjacent layers in different segments of the first grade is 0;
    step 2) dividing big data to be processed into M sub-sets according to a type of the data, and respectively input into M segments of a first layer of the segment-based two-grade deep learning model for processing; and
    step 3) outputting a big data processing result.

2. The big data processing method for a segment-based two-grade deep learning model of claim 1, wherein, the step 1) further comprises:

step 101) dividing a deep learning model with a depth of L layers into two grades in a longitudinal level, i.e., a first grade and a second grade; wherein, an input layer is a first layer, an output layer is an $L^{th}$ layer, and an $(L^*)^{th}$ layer is a division layer, $2 \leq L^* \leq L-1$, then all the layers from the first layer to the $(L^*)^{th}$ layer are referred to as the first grade, and all the layers from an $(L^*+1)^{th}$ layer to the $L^{th}$ layer are referred to as the second grade;

step 102) dividing neuron nodes on each layer of the first grade into M segments in a horizontal direction:

    it is set that an input width of the L-layer neural network is N, that is, each layer has N neuron nodes, the neuron nodes of the first grade are divided into M segments, and a width of each segment is $D_m$, $1 \leq m \leq M$ and

    $$\sum_{m=1}^{M} D_m = N$$

    and in a same segment, widths of any two layers are the same;

step 103) dividing training samples into M sub-sets, and respectivelyinput into the M segments of the first layer of the deep learning model;

step 104) respectively training sub-models of the M segments of the first grade:

    the weight between neuron nodes of adjacent layers in different segments of the first grade is 0, that is, a set of all the nodes of the $m^{th}$ segment is $S_m$, any node of the $(l-1)^{th}$ layer is $s_{i(m),l-1} \in S_m$, wherein $2 \leq l \leq L^*$, while any node of the $l^{th}$ layer of the $o^{th}$ segment is $s_{j(o),l} \in S_o$ and $m \neq o$, then a weight between node $s_{i(m),l-1}$ and node $s_{j(o),l}$ is 0, i.e., $w_{i(m),j(o),l} = 0$ ;
    under the above constraint conditions, the sub-models of the M segments of the first grade are respectively trained via a deep neural network learning algorithm;

step 105) training each layer of the second grade; and

step 106) globally fine-tuning a network parameter of each layer via the deep neural network learning algorithm, till the network parameter of each layer reaches an optimal value.

3. The big data processing method for a segment-based two-grade deep learning model of claim 2, wherein, a value of L* is taken by determining an optimal value in a value taking interval of L* via a cross validation method.

Constructing and training a segment-based two-grade deep learning model

Dividing big data to be processed into M sub-sets according to the type of the data, and respectively inputting same into M segments of a first layer of the segment-based two-grade deep learning model for processing

Outputting a big data processing result

FIG. 1

FIG. 2

<table>
<tr><td colspan="2"><p style="text-align:center">**INTERNATIONAL SEARCH REPORT**</p></td><td>International application No.<br><br>**PCT/CN2015/075472**</td></tr>
</table>

**A. CLASSIFICATION OF SUBJECT MATTER**

G06N 3/02 (2006.01) i

According to International Patent Classification (IPC) or to both national classification and IPC

**B. FIELDS SEARCHED**

Minimum documentation searched (classification system followed by classification symbols)

G06N 3/-, G06F 17/-

Documentation searched other than minimum documentation to the extent that such documents are included in the fields searched

Electronic data base consulted during the international search (name of data base and, where practicable, search terms used)

CNTXT, CNABS, DWPI, CNKI: nerve cell, depth, two-stage, deep, learning, big data, neural network, segment+, layer

**C. DOCUMENTS CONSIDERED TO BE RELEVANT**

| Category* | Citation of document, with indication, where appropriate, of the relevant passages | Relevant to claim No. |
|---|---|---|
| A | CN 103945533 A (JINAN JIAKE ELECTRONIC TECHNOLOGY CO., LTD.), 23 July 2014 (23.07.2014), the whole document | 1-3 |
| A | WO 2014205231 A1 (UNIV MICHIGAN), 24 December 2014 (24.12.2014), the whole document | 1-3 |
| A | CN 104102929 A (HARBIN INSTITUTE OF TECHNOLOGY), 15 October 2014 (15.10.2014), the whole document | 1-3 |

☐ Further documents are listed in the continuation of Box C.　　☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 20 October 2015 (20.10.2015) | **18 December 2015 (18.12.2015)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**YI, Jian**<br><br>Telephone No.: (86-10) **62089283** |

Form PCT/ISA/210 (second sheet) (July 2009)

## INTERNATIONAL SEARCH REPORT
### Information on patent family members

| | International application No. |
|---|---|
| | **PCT/CN2015/075472** |

| Patent Documents referred in the Report | Publication Date | Patent Family | Publication Date |
|---|---|---|---|
| CN 103945533 A | 23 July 2014 | None | |
| WO 2014205231 A1 | 24 December 2014 | None | |
| CN 104102929 A | 15 October 2014 | None | |

Form PCT/ISA/210 (patent family annex) (July 2009)